# EUROPEAN PATENT APPLICATION

(11) **EP 4 733 232 A1**
(43) Date of publication of application: **29.04.2026**
(21) Application number: 25201304.0
(22) Date of filing: 10.09.2025
(51) Int. Cl.: B65H 5/02, B65H 39/06, B65H 43/04, B42D 5/02

(54) **APPARATUS FOR THE DISTRIBUTION OF CARDS ON CARRIERS**

(30) Priority: 25.10.2024 IT 202400023952
(71) Applicant: BÖWE SYSTEC GmbH, 86159 Augsburg (DE)
(72) Inventor: Prataiola, Alessandro, 38122 Trento (IT)
(74) Representative: Charrier Rapp & Liebau

(57) **Abstract**

An apparatus (500) for the distribution of cards (610) on carriers, comprising a first conveying line (10) to transport individual carriers (110) from an inlet section (120) to an outlet section (150), and a second conveying line (20) to transport individual cards (610) , allows to check all the data impressed on the carrier, regardless they are impress on an exposed surface or on a surface facing downwards, and includes: an inlet check station (160) at said inlet section, apt to carry out a check on data impressed on the incoming carriers; a conveying device (30), making said incoming unloaded carriers (110) travel across said inlet check station (160) in a configuration suitable for the matching with one or more card on a upper exposed surface of the incoming unloaded carrier (110; and a matching station (140), wherein at least one robotized device (6) is apt to pick individual cards (610), to placed them on the target surface of an intended carrier, wherein said inlet check station (160) comprises a checking area (116) having a transparent support plane (240), on which said incoming unloaded carriers (110) are induced to slide to travel across the checking area (116) by said conveying device (30) through the application of a driving force at the side edges of the incoming carriers.

Int. Class.: B 65 H

## Description

The present invention is related to an apparatus for the distribution of cards on carriers, possibly consisting in one paper sheet to be used as paper carrier or substrate, or simply carrier, for one or more cards to be used in the direct mailing of said cards.

This kind of apparatus comprises a first conveying line to transport individual carriers, i.e. paper documents already having all the requested data impressed thereto, from an inlet section to an outlet section of the apparatus, and at least one second conveying line to transport individual cards to be individually matched with the incoming carriers.

It is known that the direct mail is an important tool for businesses to communicate with customers, and then to satisfy the need to distribute cards, such as debit or credit cards, business cards, identification documents like ID cards or driving licenses, or membership cards as well to individuals by mail.

These cards may be personalized or sent in a single package combined with other inserts or mailer components, inserted in an envelope addressed to the appropriate recipient, all of which makes the preparation of such mailers very labor-intensive and demanding.

Here and hereinafter under the term "card" a substantially stiff card is meant, basically with rectangular shape, made of plastic or other plasticized material, possibly including identifying information, biometric data, pictures, alphanumerical characters, QR or bar codes, ICAO MRTD or eMRTD readable characters, RFID or NFC tags and magnetic strips.

This kind of card usually has a format defined according to ISO standard 7810, 7811, 7813, 7816, 14443 or a format A7, A8, B7, B8, C7, C8 according to ISO standard 216. This kind of card format can even be used for magnetic or optical memories, toy cards, collection cards, badges, access keys for smart locks etc. All these items fall within the definition of "card".

It is understood that the cards, besides being stiff or generally stiffer than paper, may be considered to a certain extent fragile, or containing delicate parts.

Generally, such cards are mailed on a paper carrier being attached to the latter by means of glue, double-sided adhesive tape, or by framing into suitable notches as well. The recipient address can be printed on the paper carrier to be seen through a window of the envelope, or directly on the envelope itself. The carrier, and possibly the envelope, contain also identification data which may allow the safe coupling with the intended card only.

Then the paper carriers have an exposed area on which one or more cards are attached. The paper carriers generally have the format of an A4 or Letter sheet and, before being inserted in the related envelope, must be folded in two or three folds, in the latter case with a Z-like folding or a C-like folding.

Mail preparation and finishing systems increase efficiency by automating the printing, folding, and insertion processes. However, the distribution of individual cards to personalized carriers represent a critical phase of the overall mailing process.

However, it is required to use robotized device to carry out a faster distribution phase, with a simultaneous check at the input and at the output of the pre-printed carriers, usually already provided with folds or folding lines to ease the subsequent enveloping phase.

As a matter of fact, the different format and fold configuration of the carrier could hinder the correct identification of the personal data already present on the carrier, then the coupling of the carrier with the related cards may be affected by errors which would complicate the mailing process, forcing the mailing provider to repeat the distribution phase more times.

Further, in known apparatuses, the cards are fed to a first conveying line by suitable feeder, while the carriers are fed through a second conveying line to a card-paper carrier coupling station. On both the conveying lines reading stations must be provided to read the identification data and for ensuring that the conveying lines themselves are synchronized and that the coupling between card and respective carrier is error-proof, in consideration of the delicacy and the importance of the personal data contained in the cards.

The technical problem underlying the present invention is to provide an apparatus for the distribution of cards on carriers allowing to obviate the drawback mentioned with reference to the known art.

The above-mentioned problem then is solved by an apparatus as specified above, and as defined in appended claim 1.

According to the present invention, the apparatus for the distribution of cards on carriers can be shortly mentioned as distribution apparatus.

Therefore, preferred embodiments of the present invention include an inlet check station at said inlet section, which is apt to carry out a check on data impressed on the incoming carriers.

At the inlet check station, the apparatus of the present invention has a conveying device, making said incoming carriers travel across said inlet check station in a configuration suitable for the matching with one or more card on a upper exposed surface of the incoming carrier.

In this connection, the carrier could be in a flat configuration or it can be partially folded, so that the above data may be impressed on said exposed upper surface, otherwise on a hidden surface, i.e. faced downward.

The apparatus further comprises a matching station, wherein at least one robotized device is apt to pick individual cards, to place them on the target surface, i.e. a portion of said upper exposed surface, of an intended carrier.

According to the invention, the inlet check station comprises a checking area having a transparent support plane, on which said incoming carriers are induced to slide, to travel across the checking area by said conveying device through the application of a driving force at the side edges of the incoming carriers.

The main advantage of the apparatus according to the present invention lies in the fact of allowing to check all the data impressed on the carrier, regardless they are impress on an exposed surface or on a surface facing downwards.

The present invention will be described hereinafter according to a preferred embodiment thereof, provided by way of example and not with limitative purpose with reference to the enclosed drawings wherein:

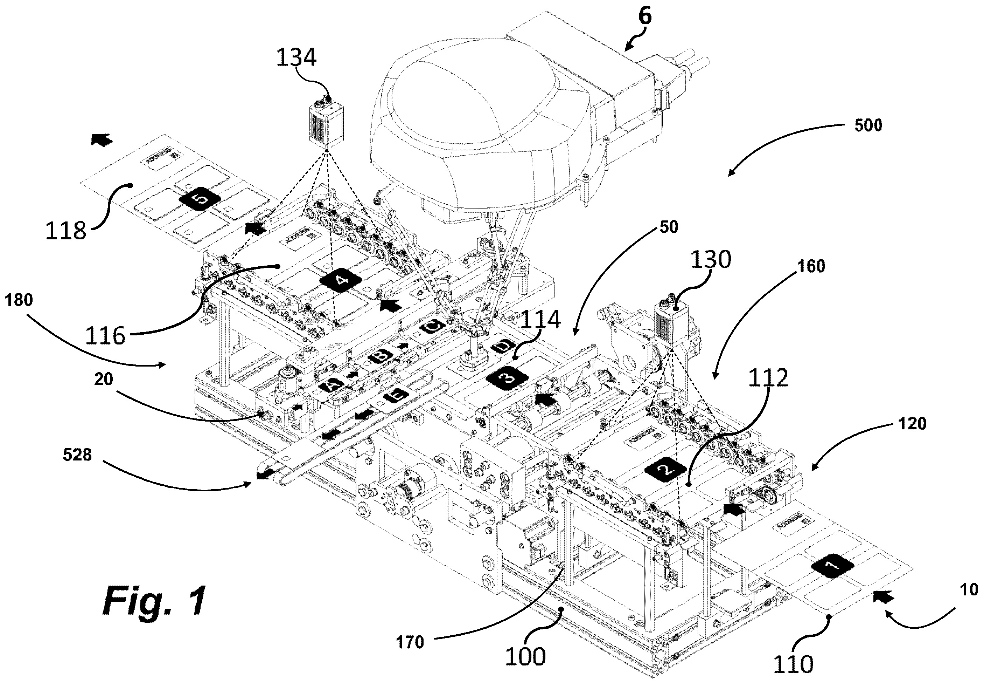

- figure 1 shows an axonometric view of an embodiment of a distribution apparatus according to the invention;

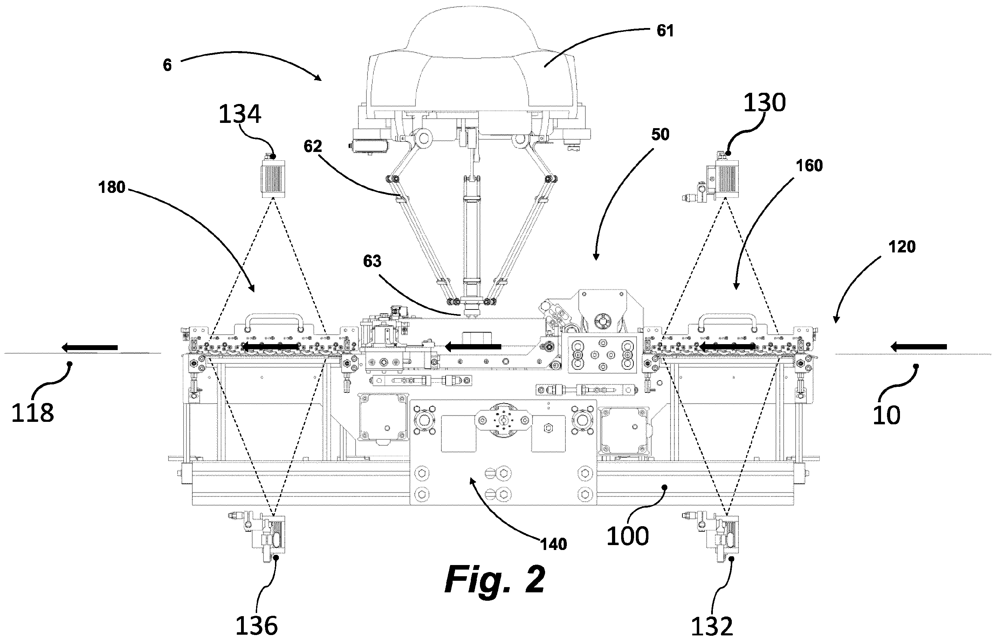

- figure 2 is a front view of the distribution apparatus of figure 1;
- figure 3A shows an axonometric view of the distribution apparatus of figure 1, wherein some outer parts are excluded to show the inside;
- figure 3B is a partially exploded axonometric view of the inside of the apparatus as shown in figure 3A;

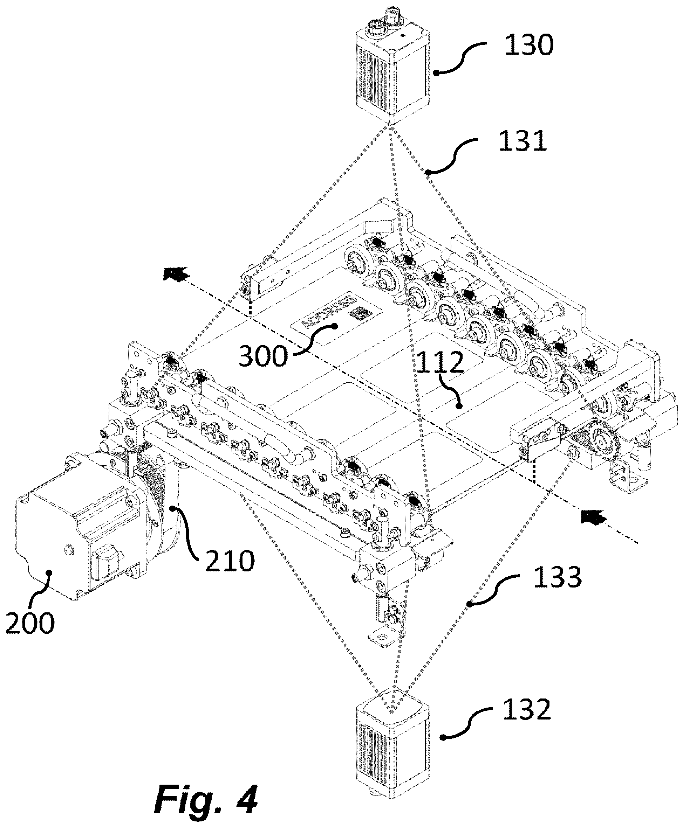

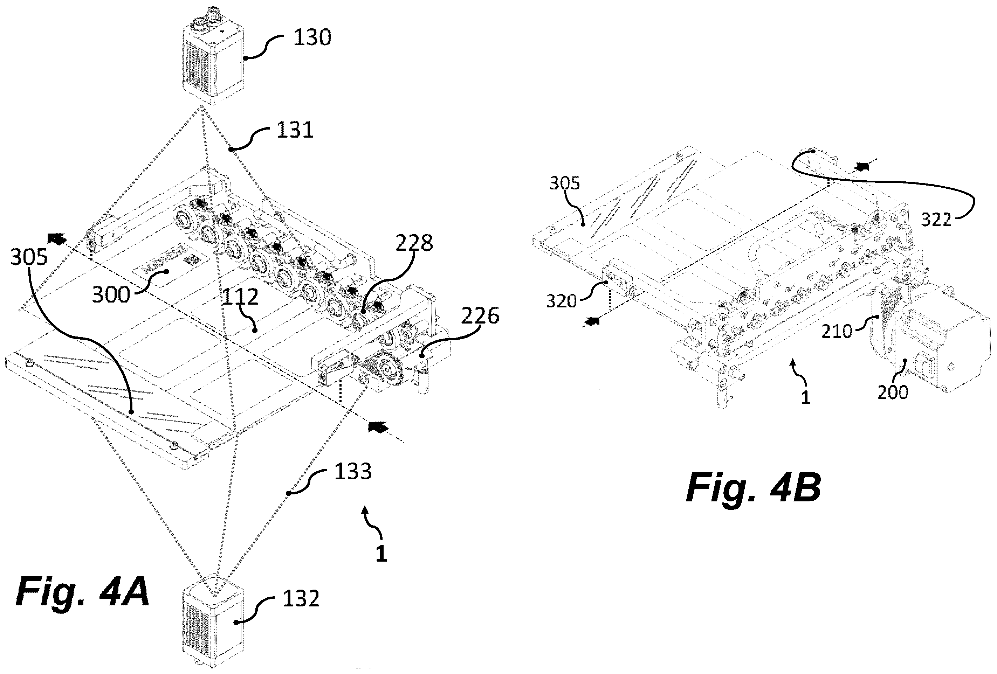

- figure 4 shows an axonometric partial view of a first functional group of the distribution apparatus of figure 1;
- figure 4A shows an axonometric view of the functional group of figure 4, wherein some outer parts are excluded;
- figure 4B an axonometric reverse view of functional group of figure 4, wherein some outer parts are excluded;
- figure 5 shows a cut-away view of the functional group of figure 4;
- figure 5A shows an axonometric view of a magnified detail of the functional group of figure 4;
- figure 6A shows an axonometric partial view of a second functional group of the distribution apparatus of figure 1;
- figure 6B shows an axonometric partial view in reverse of the second functional group of figure 9A; and
- figures 7A and 7B show an axonometric view illustrating the operation of the distribution apparatus of figure 1.

With reference to the figures, an apparatus for the distribution of cards on carriers, shortly mentioned as distribution apparatus, is designated as a whole with 500.

The apparatus 1 of the present invention is substantially provided for receiving a flow of cards through a first conveying line and a flow of carrier in a flat configuration through a second conveying line, having a target surface facing upwards. The apparatus 1 is equipped with check systems to run a distribution process wherein individual cards are picked individually by a robotized device and placed on the target surface of an intended carrier, then conveying such a coupling of cards and carriers to a subsequent station where an enveloping process is carrier out.

Generally speaking, the apparatus 500 comprises a first conveying line 10 to transport individual carriers from an inlet section 120 to an outlet section 150, and a second conveying line 20 to transport individual cards 610.

The apparatus 500 has a supporting frame built on a base platform 100, wherein are arranged first supporting frame 170 at the inlet section 120, a second supporting frame 190 at the outlet section 150, and a central frame in the middle.

The supporting frames are structured to leave an empty space between the base platform 100 and an upper level at which the first conveying line 10 is arranged.

The apparatus 500 comprises a first inlet check station 160 arranged at said inlet section, on the first supporting frame 170, on which unloaded carriers 110 are travelled to be check before being matched with corresponding individual cards 610, the unloaded carrier 110 being in a flat configuration, possibly having folding lines 114 therein, or partially folded.

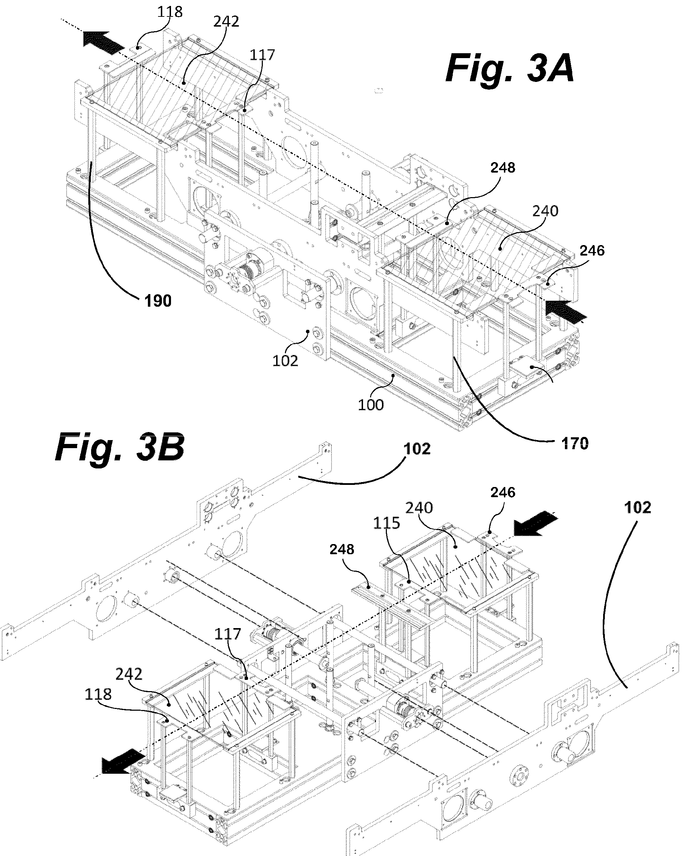

A first inlet plate 246 is provided at the inlet section, while first outlet plate 115 is provided at the outlet of the inlet check station, connection the first conveying line to the subsequent station (figure 3A).

On any unloaded carrier 110, individual or personal data 300 are impressed, to check the subsequent match with the cards 610 to applied thereto.

The first check station 160 comprises a checking area having a transparent support plane 240, on which said unloaded carriers 110, also mentioned as incoming carriers, are induced to slide to travel across the checking area, in a configuration suitable for the matching with one or more card on a upper exposed surface.

In this connection, the first check station 160 includes a respective first conveying device 30, making said incoming carriers travel on said transparent support plane 240 through the application of a driving force at the side edges of the incoming carriers 110.

The transparent plane 240 is suspended on said supporting frame 170 leaving the space beneath the transparent plane 240 substantially empty.

The inlet check station 240 comprising at least one upper detecting device 130, suspended above the transparent plane 240, and lower detecting device 132 placed in said space beneath the transparent plane 240.

The upper detecting device 130 is a first digital camera having upper vision volume 131 in which falls said checking area. Likewise, the first lower detecting device 132 is a second digital camera defining a lower vision volume 133 in said empty space, directed towards the transparent support plane 240.

Moreover, the apparatus 500 comprises an inlet optical sensor 320, placed at said inlet section, and an outlet optical sensor 322 placed at the output of the inlet check station, suspended on respective arms, apt to detect the running edge and the tail of any carrier travelled through the first check station 160.

The first conveying device 30 comprises respective first endless belts 210 which are driven by corresponding toothed drive wheels 205 mounted on a drive shaft of a first motor 200.

The endless belts are embodied by a toothed belt, possibly made of rubbery material so as to provide a high friction on a sliding surface 305 of the support plane 240. The first endless belt 210 is arranged to form a driving segment extending from related inlet wheels 222 to related outlet wheels 220, respectively placed at the inlet section and at the output of said inlet check station 160, thereby the driving segment is driven to slide on said transparent support plane 240 to transmit said driving force.

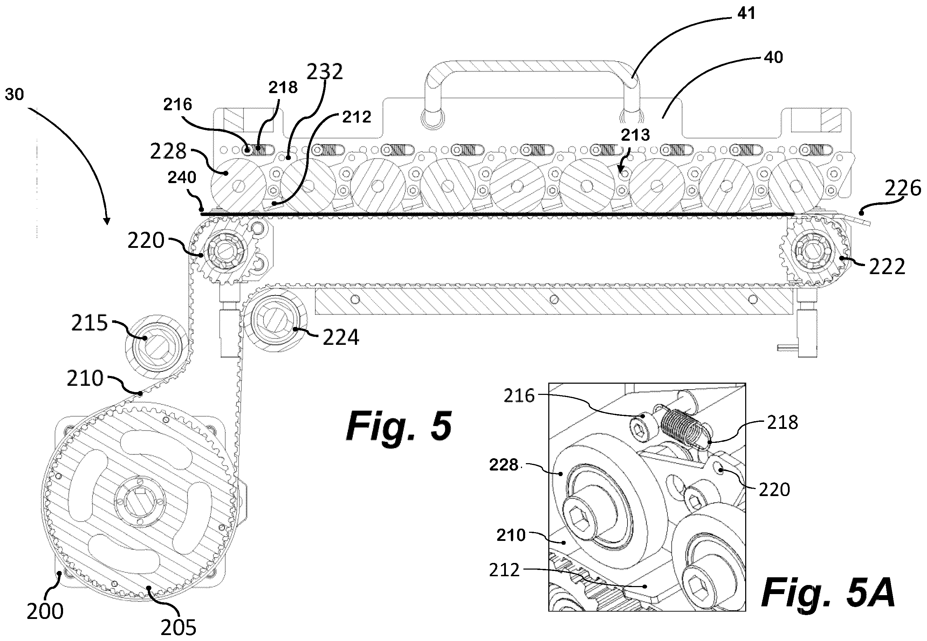

The path of the first endless belt 210 is also defined by a first and a second tensioning wheel 215, 224 (figure 5).

The conveying device 30 further comprises a plurality of pressing rollers 228 arranged along said driving segment of each first endless belt 210; the pressing rollers 228 are idle, being journaled in bearing mounted on a pressing lever 232 having a fulcrum 213 integral to a supporting frame member 40, the lever 232 being rotated by a respective spring 218 connected to the frame member 40 by a hook 216.

Each pressing roller 228 is independent and separated by the adjacent ones by a septum 212 which integral to the lever 232.

Said frame member 40, which is placed at each side of the support plane 240, movable in a direction transversal to the transparent supporting plane 240, towards the center line thereof, with the help of a handle 41 or by other appropriate displacing devices.

The apparatus comprises a bonding station 50 is provided between said inlet check station and said matching station, the bonding station 50 being apt to apply to said upper exposed surface respective bonding point.

At the bonding station 50, the apparatus 500 comprises a second motor 450 which rotates a second drive wheel 595 which in turn is a toothed wheel dragging a second endless belt 468 which is engaged with two different tail wheels, namely a first tail wheel 461, which is connected to the end of a first lower shaft 476, and a second tail wheel 463 which is connected to the end a second lower shaft 472.

The first lower shaft 476 has a first lower pinion 465 mounted thereto, at the same end of the first tail wheel 461, engaged with a first upper pinion 462 which is connected to the end of a first upper shaft 474. Said pinions 465, 462 have a 1:1 transmission ratio.

Said lower and upper first shafts 476, 474 are both journaled in bearings mounted on side frame plates 102 which operate as side walls and shaft supporting plates at the opposite sides of the apparatus 100, extending theralong, suspended in a vertical position on the supporting frame built on a base platform 100, i.e. on the first supporting frame 170, the second supporting frame 190, and realizing said central frame in the middle.

Said lower and upper first shafts 476, 474 carry a respective pair of first upper dragging roller 455 and first lower dragging roller 456, having the same diameter and kept in contact to each other, rotating at opposite directions at the same rate and at the same peripheral speed.

These dragging rollers are provided to catch the running from edge of the carrier at the outlet of the first check station 160, to make the carrier advance beyond, through the bonding station 50.

The second lower shaft 472 has a second lower pinion 464 mounted thereto, at the same end of the second tail wheel 463, engaged with a second upper pinion 466 which is connected to the end of a second upper shaft 470. Said pinions 464, 466 have a 1:1 transmission ratio.

Said lower and upper first shafts 472, 470 are both journaled in bearings mounted on said side frame plates 102.

The second lower shaft 472 has a respective second lower dragging roller 458, and said second upper shaft 470 has multiple upper dragging rolls 460, shaped as wheels mounted at a certain distance to each other, but having the same diameter of the second lower dragging roller 458 so as they are kept in contact to each other and rotated at opposite directions, rotating at the same rate and at the same peripheral speed.

These further dragging rollers are provided to cooperate with the first dragging rollers, at a distance therefrom to catch the carrier together when it passes through them, both to make the carrier advance beyond, through the bonding station 50, and to have the carrier tensioned at the bonding station.

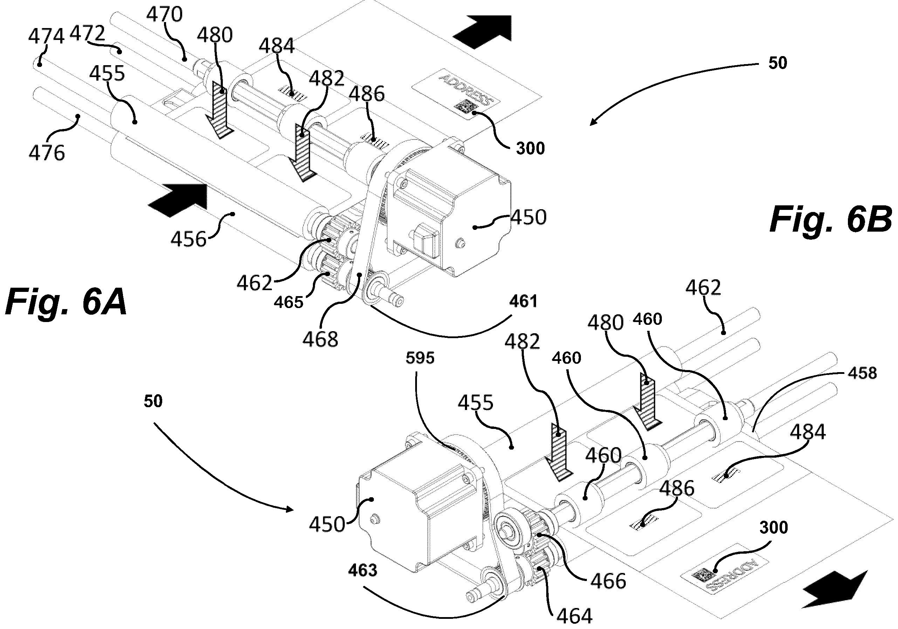

In this connection, the bonding station 50 comprises at least one glue gun for depositing glue point 484, 486 at upper exposed surface to act as respective bonding point; according to the drawings at figures 6A, 6B two glue guns are provided, schematically represented by arrows 480, 482, and three upper dragging rolls 460 are provided, to have the respective two glue points 484, 486 go untouched by them.

It should be noted that, at the bonding station 50, following the information caught by the first check station 160, the glue guns 480, 482 are not operated in the area containing relevant data 300.

At the outlet of the bonding station 50, a rejection plate 248 is provided, apt to divert carriers which have been found not in conformity with the system expectations in the first check station 160, deviating them in a rejection box placed beneath the first conveying line.

Then, the unloaded carrier 110 advanced through a matching station 140, wherein at least one robotized device is provided, suspended over the flow of carriers along said first conveying line 10, and where said second conveying line 20 transporting individual cards 610 has its terminal end, so that said robotized device is a pick and place robotized device, apt to pick individual cards, to 610 placed them on the target surface of an intended unloaded carrier 110, to have finally loaded carriers 118.

In the present embodiment, the robotized device is a delta robot supported by a suspended platform 61 and having multiple articulated arms 62, each provided with a relative picking device 63 attached at the terminal operative end thereof; the picking device 63 is a suction-based device, a suction cup pneumatically operated to capture and release individual cars.

At the matching station 140, the apparatus 500 is provided with a rejection conveying line 528 for the transport of cards not applicable to any carrier, fed by the delta robot.

Further along said first conveying line 10, the apparatus 500 comprises a second check station 180 operating as outlet check station, suspended on said second supporting frame 190 and providing a second checking area 116 comprising a respective second upper detecting device 134, made by a third digital camera, and a respective second lower detecting device 136, made by a fourth digital camera.

A second inlet plate 117 is provided at the inlet section of the second check station 180, while second outlet plate 118 is provided at the outlet thereof, as connections of the first conveying line (figure 3A).

The outlet check station is suspended on the respective supporting frame 190 leaving the space beneath a respective transparent plane substantially empty, where said second lower detecting device 136 is placed.

It is intended that in the present embodiment and according to the present invention, the first and the second check station 140, 180 have substantially the same structure and construction, with the checking area provide on a respective transparent support plane, on which said outgoing loaded carriers 118 are induced to slide to travel across the checking area, with a second conveying device applying of a driving force at the side edges of the outgoing carriers.

It is therefore intended that the first and the second conveying devices have substantially the same structure and construction, so that the second conveying device comprises respective endless belts which are driven by a respective drive wheel and forming a driving segment extending from related inlet wheels to related outlet wheels, respectively placed at the inlet and at the output of said outlet check station, thereby the driving segment is driven to slide on said transparent support plane to transmit said driving force. These endless belts are again pressed by a respective plurality of idle pressing rollers arranged along said driving segment of each endless belt, journaled in bearing mounted on a lever having a fulcrum integral to a respective frame member, the lever being rotated by a respective spring connected to the frame member, and finally the frame member is movable in a direction transversal to the transparent supporting plane, towards the center line thereof.

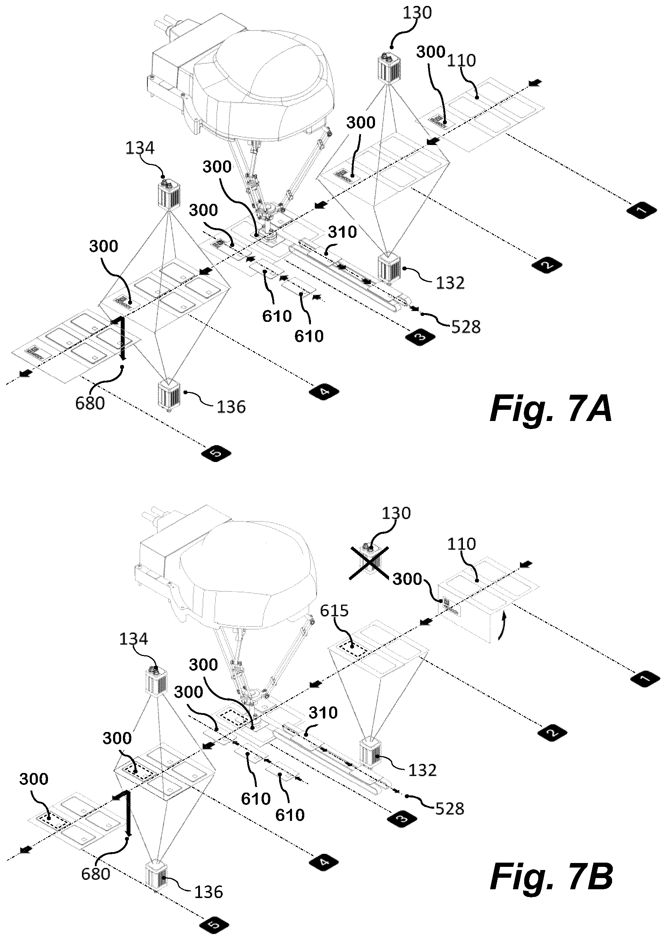

To summarize, with reference to figure 7A, the apparatus 500 receives unloaded carriers 110 from any suitable source (1) in a flat configuration; then the advancing carrier is checked by the first check station 160 which can observe all the data impressed therein on both the carrier faces (2).

Then, the carrier optionally receives bonding means, which may in turn be applied to the cards, at the bonding station 50. Afterwards, the carriers are advance through the matching station 140, where a robotized device pick cards 610 from a respective terminal end of a dedicated conveying line and place them on the carriers at the related bonding means (3).

Next, the loaded carriers 118 come through a second check station 180, wherein the conformity of the coupling of cards and carriers is finally checked observing all the data impressed on carriers and cards on both the carrier faces (4), possibly rejecting wrong couplings via a discharge line 680.

Finally, the loaded carriers 118 are released at the outlet section of the apparatus 500 (5).

Then, with reference to figure 7B, the apparatus 500 receives unloaded carriers 110 from any suitable source (1) in a folded configuration, i.e. with a flap hidden beneath the main portion of the carrier 110, possibly having relevant data impressed on the surface thereof facing downwards.

In any case, the advancing carrier is checked by the first check station 160 which can observe all the data impressed therein on both the carrier faces (2).

Then, the carrier optionally receives, only on the surface facing upwards, bonding means, which may in turn be applied to the cards, at the bonding station 50.

Afterwards, the carriers are advance through the matching station 140, where a robotized device pick cards 610 from a respective terminal end of a dedicated conveying line and place them on the carriers at the related bonding means (3).

Next, the loaded carriers 118 come through a second check station 180, wherein the conformity of the coupling of cards and carriers is finally checked observing all the data impressed on carriers and cards on both the carrier faces (4), possibly rejecting wrong couplings via a discharge line 680.

Finally, the loaded carriers 118 are released at the outlet section of the apparatus 500 (5).

All the cited motors are meant to be electric motors acting as servomotor equipped with an electronic encoder driven feedback allowing the shaft connected thereto to rotate at a controlled and precise rate. All these motors, the robot, and all the sensors provided throughout the apparatus 500 refer to a control unit having a user interface.

Therefore, the distribution apparatus 500 can be monitored and controlled via this user interface, which may be physically attached to the apparatus or may be located remotely. The user interface can be a touchscreen or other similar input device, and it can display parameters and operating conditions to an operator to control the functioning of the apparatus 1.

The user interface is associated with at least one processor that is configured to control all the scheduled operations of the apparatus 500. The user interface may employ software, hardware, firmware, hardwiring, or combinations of any of these. Features implementing functions can also be physically located at various positions, including being distributed such that portions of functions are implemented at different physical locations.

Aspects of the present disclosure described herein, such as the speed and control of rollers, tilting chutes, and carrier guides, as described above, and the monitoring and controlling of various parameters, can be performed using any type of computing device, such as a computer or programmable logic controller (PLC), that includes a processor, e.g., a central processing unit, or any combination of computing devices where each device performs at least part of the process or method. In some embodiments, systems and methods described herein may be performed with a handheld device, e.g., a smart tablet, a smart phone, or a specialty device produced for the system.

To the above-described apparatus for the distribution of cards on carriers a person skilled in the art, to satisfy additional and contingent needs, can introduce several additional modifications and variants, all however comprised within the protective scope of the present invention, as defined by the enclosed claims.

## Claims

1. Apparatus (500) for the distribution of cards (610) on carriers comprising a first conveying line (10) to transport individual carriers from an inlet section (120) to an outlet section (150), and a second conveying line (20) to transport individual cards, the apparatus (500) further including:
• an inlet check station (160) at said inlet section (120), apt to carry out a check on data impressed on the incoming unloaded carriers (110);
• a conveying device (30), making said incoming unloaded carriers (110) travel across said inlet check station (160) in a configuration suitable for the matching with one or more cards (610) on a upper exposed surface of the incoming unloaded carrier (110); and
• a matching station (140), wherein at least one robotized device (6) is apt to pick individual cards (610), to placed them on the target surface of an intended carrier,
wherein said inlet check station (160) comprises a checking area (116) having a transparent support plane (240), on which said incoming unloaded carriers (110) are induced to slide to travel across the checking area (116) by said conveying device (30) through the application of a driving force at the side edges of the incoming unloaded carriers (110).

2. Apparatus (500) according to claim 1, wherein said transparent support plane (240) is suspended on a supporting frame (170) leaving the space beneath the transparent support plane substantially empty, the inlet check station (160) comprising at least upper detecting device (130) suspended above the transparent plane and lower detecting device (132) placed in said space beneath the transparent support plane (240).

3. Apparatus (500) according to claims 1 or 2, comprising an inlet optical sensor (320), placed at said inlet section (120), and an outlet optical sensor (322) placed at the output of the inlet check station (160).

4. Apparatus (500) according to any of the preceding claims, wherein said conveying device (30) comprises respective endless belts (210) which are driven by a respective drive wheel (205) and forming a driving segment extending from related inlet wheels (222) to related outlet wheels (220), respectively placed at the inlet section (120) and at the output of said inlet check station (160), thereby the driving segment is driven to slide on said transparent support plane (240) to transmit said driving force.

5. Apparatus (500) according to claim 4, wherein the conveying device (30) comprises a plurality of pressing rollers (228) arranged along said driving segment of each endless belt (210).

6. Apparatus (500) according to claim 5, wherein the pressing rollers (228) are idle, being journaled in bearing mounted on a lever (232) having a fulcrum (213) integral to a frame member, the lever being rotated by a respective spring (218) connected to the frame member.

7. Apparatus (500) according to claim 6, wherein said frame member is movable in a direction transversal to the transparent supporting plane (240), towards the center line thereof.

8. Apparatus (500) according to any of the preceding claims, wherein a bonding station (50) is provided between said inlet check station (160) and said matching station (140), the bonding station being apt to apply to said upper exposed surface respective bonding point (484, 486).

9. Apparatus (500) according to claim 8, wherein said bonding station (50) comprises at least one glue gun (480, 482) for depositing glue point at upper exposed surface to act as respective bonding point (484, 486).

10. Apparatus (500) according to claims 8 or 9, wherein the bonding station (50) comprises a first pair of upper and lower dragging rollers and a second pair of upper and lower dragging rollers (455, 456, 458, 460), apt to capture the running front edge of the carrier, said first and second pairs being arranged at a determined distance thereby they both can trap the carrier, said bonding point (484, 486) being applied between said first and second pairs.

11. Apparatus (500) according to any of the preceding claims, wherein said robotized device (6) is a delta robot.

12. Apparatus (500) according to any of the preceding claims, comprising a rejection conveying line (528) for the transport of cards not applicable to any carrier.

13. Apparatus (500) according to any of the preceding claims, comprising a further outlet check station (180) along said first conveying line (10), apt to carry out a check on data impressed on the outgoing loaded carriers (118) and on the related cards (610) applied thereto, and a respective conveying device, making said outgoing loaded carriers (118) travel across said outlet check station (180), wherein said outlet check station (180) comprises a respective checking area having a further transparent support plane, on which said outgoing carriers are induced to slide to travel across the checking area by said conveying device through the application of a driving force at the side edges of the outgoing carriers.

14. Apparatus (500) according to claim 13, wherein the transparent plane of the outlet check station (180) is suspended on a respective supporting frame (190) leaving the space beneath the transparent plane substantially empty, the outlet check station (180) comprising at least upper detecting device (134) suspended above the transparent plane and lower detecting device (136) placed in said space beneath the transparent plane.

15. Apparatus (500) according to claim 13 or 14, wherein the conveying device of the outlet check station (180) comprises respective endless belts which are driven by a respective drive wheel and forming a driving segment extending from related inlet wheels to related outlet wheels, respectively placed at the inlet and at the output of said outlet check station (180), thereby the driving segment is driven to slide on said transparent support plane to transmit said driving force.

16. Apparatus (500) according to claim 15, wherein the conveying device comprises a plurality of pressing rollers arranged along said driving segment of each endless belt.

17. Apparatus (500) according to claim 16, wherein the pressing rollers are idle, being journaled in bearing mounted on a lever having a fulcrum integral to a frame member, the lever being rotated by a respective spring connected to the frame member, wherein said frame member is movable in a direction transversal to the transparent supporting plane, towards the center line thereof.
